# EUROPEAN PATENT APPLICATION

(11) **EP 1 679 681 A1**
(43) Date of publication of application: **12.07.2006**
(21) Application number: 05011283.8
(22) Date of filing: 25.05.2005
(51) Int. Cl.: G09G 3/28

(54) **Plasma display apparatus and method for processing image thereof**

(30) Priority: 11.01.2005 KR 2005002669
(71) Applicant: LG ELECTRONICS INC., Seoul, 150-721 (KR)
(72) Inventor: Song, Byung Soo Geonyeong Villa, Goyang-si Gyeonggi-do (KR); Moon, Seong Hak, Seoul (KR); Lee, Jun Hak Ggotmebeodeul Maeul Apt., Suwon-si Gyeonggi-do (KR); Kim, Hwan Yu, Seoul (KR); Baek, Seung Chan, Seoul (KR); Iwamoto, Kazuhisa LG Electronics Inc., Iwamotocho3-9-5 Chiyoda Tokyoto 101-003 (JP); Shinohara, Masahiko LG Electronics Inc. 5th Floor, Chiyoda Tokyoto 101-0032 (JP)
(74) Representative: Zech, Stefan Markus

(57) **Abstract**

The present invention relates to a plasma display apparatus for displaying TV images and a method for processing image thereof. The plasma display apparatus according to the present invention comprises a gray-level signal division part for dividing a gray-level signal during one frame into a first gray-level signal and a second gray-level signal, a high pass filter filters the first gray-level signal through high frequency bandwidth and a low pass filter filters the second gray-level signal through low frequency bandwidth. As a result, both flicker and a dual-image phenomenon is reduced.

## Description

### BACKGROUND OF THE INVENTION

### Field of the Invention

The present invention relates to a plasma display panel, in particular a plasma display apparatus for removing flicker and dual image on a display panel and a method for processing image thereof.

### Description of the Background Art

Generally in a plasma display panel, a barrier made between a front substrate and rear substrate consist of a unit cell, and each cell is filled inert gas comprising primary emitting gas such as Neon, Helium or mixture thereof and small amount of xenon. When emitted by high frequency voltage, the inert gas emits vacuum ultraviolet rays to make a fluorescent material radiate for making image on a display panel. Such display panel takes a notice of as next display apparatus because the panel structure can be made thin and light.

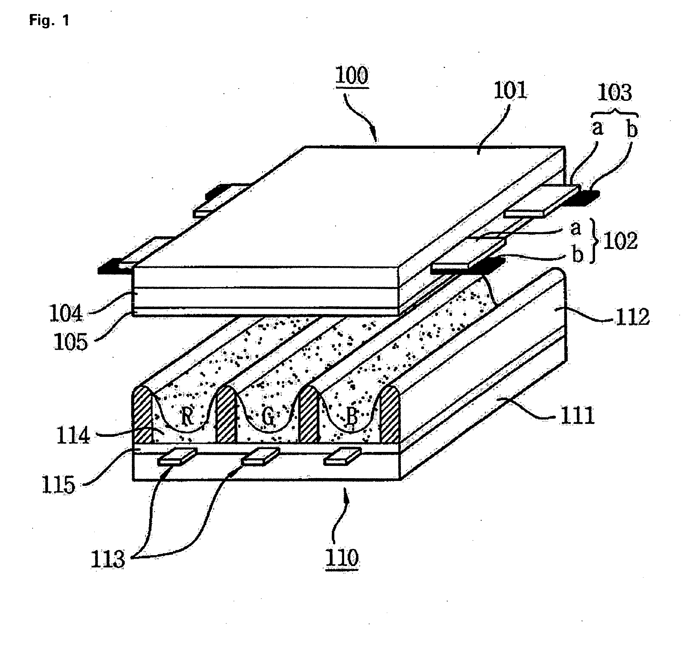

Fig.1 shows the structure of a common plasma display panel. Referring to Fig.1, the plasma display panel comprises a front substrate 100 having a front glass 101 on which image is displayed and sustain electrode pairs with scan electrode 102 and sustain electrodes in pair are arranged, and a rear substrate 110 having a back glass 111 which forms a back side and on which a plurality of address electrodes are arranged with the sustain electrode and the address electrode crossed wherein the front substrate 100 is combined with the rear substrate 110 separated parallel with each other.

The front substrate 100 comprises a scan electrode 102 and a sustain electrode 103 to cross-emit and to sustain cell-emitting within one emitting-cell, namely a scan electrode 102 having a transparent electrode made of transparent ITO material with a bus electrode b made of metal material and a sustain electrode 103 in pair. The scan electrode 102 and the sustain electrode 103 constrain emitting-current and are covered by one and more upper dielectric layer 104 for insulation between the electrode pairs and on the top surface of the upper dielectric layer 104 a protection layer 105 with magnesium oxides deposited for easy emitting-condition is formed.

At the rear substrate 110 a stripe type (or well type) of barrier is arranged parallel for forming a plurality of emitting volumes or emitting cells. And also, a plurality of address electrodes are arranged parallel for generating vacuum ultraviolet rays with performance of address emitting. On the top surface of the rear substrate 110 RGB fluorescent material 114 spreads for radiating visible light to display images on address -emitting. A bottom dielectric layer 115 may be formed between the address electrode 113 and the fluorescent material 114 for protection of the address electrode 113.

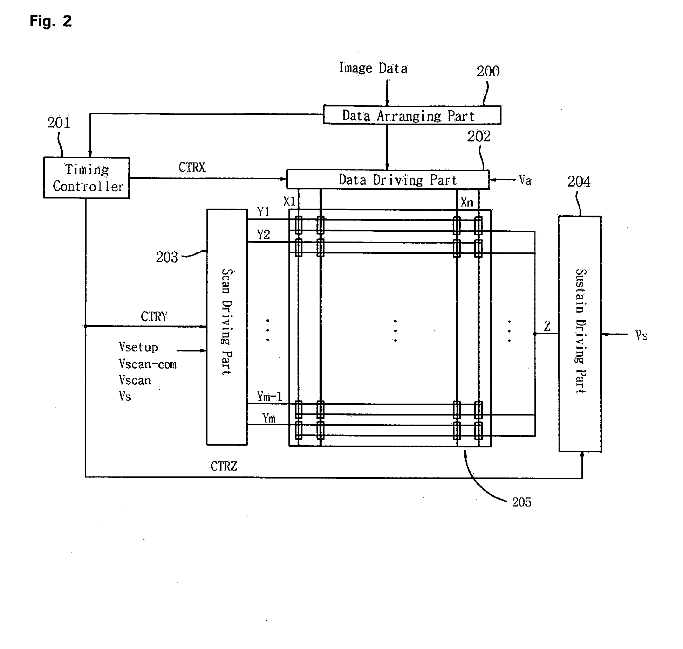

The plasma display as mentioned above has a plurality of emitting cells with matrix structure, and has a driving device having a driving module comprising a driving circuit for supplying predetermined pulse for the emitting cells. The configuration of the plasma display panel and the driving device mentioned above is shown in Fig. 2.

Fig.2 shows descriptive view for explaining the driving device of the conventional plasma display panel. Referring to Fig.2, in the driving device of the conventional plasma display panel a plurality of emitting cells attached to the display panel in the form of matrix structure are supplied with a predetermined pulse. In the above case, as shown in Fig.2, the driving device comprises a data arrangement part 200, a timing controller 201, a data driving part 202, a scan driving part 203 and a sustain driving part 204.

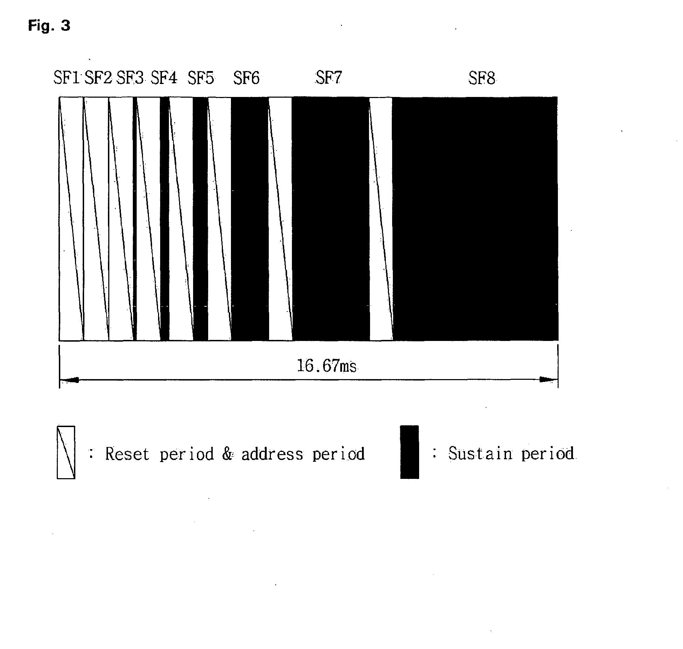

In the above conventional driving device the data arrangement part 200 arranges an image data input from an external device to supply each address electrode X1 - Xm, and then the arranged date is supplied with the address electrodes X1 - Xm of the plasma display panel 205 through the data driving part 202. And also, by means of adjustment of the timing controller 201, the scan driving part 203 supplies each scan electrode Y1- Yn with a scan signal and sustain signal, and the sustain driving part 204 supplies each sustain electrode Z with the sustain signal. In such plasma display panel the method for processing an image gray-level is shown in Fig.3.

Fig. 3 shows a method for processing an image gray-level in the conventional plasma display panel. As shown in Fig.3, referring to the method for processing image gray-level in the conventional one frame is divided into several sub-fields depending on the number of emitting light, and each sub-field is divided into a resetting-period for initiating all the cells (RPD), a addressing-period for selecting emitting cells (APD) and a sustaining-period for embodying gray-level SPD according to the number of emitting light.
For example, if an image is to be processed with 256 gray-level, then one frame period (16.67 ms) corresponding to 1/60 second is divided into eight sub-fields (SF1 to SF8), as shown in Fig. 3, and each of the eight sub-fields (SF1 to SF8) is divided into the resetting period, the addressing period and the sustaining period.

The resetting period and the addressing period are identical in all the sub-fields. A addressing emitting light for selecting cells to be emitted may be caused from the voltage difference between the addressing electrode and the transparent electrode corresponding to the scan electrode. The sustaining period increases at the rate of 2ⁿ (n = 0, 1, 2, 3, 4, 5, 6 and 7) in each sub-field.

As mentioned above, because the sustaining period differs from each other in each sub-field, the gray-level of image can be processed with the regulation of each sustaining period of the sub-field or the number of sustain-emitting light.

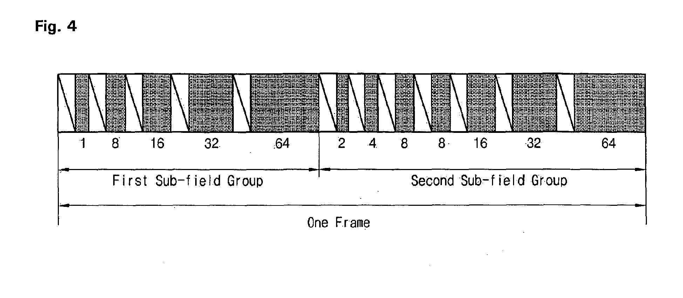

In the meanwhile, in the case of European broadcasting method, the PAL (Phase Alternate Line) and SECAM (Systems Equential Couleur A Memoire) Method has been used, and a relatively lower synchronized frequency of 50 Hz has been used in the above method. In case of the above method a flicker phenomenon may result from the lower frequency: For solving this problem the sub-field of the plasma display panel has beeri constructed as shown in Fig. 4.

Fig. 4 shows the outline of sub-fields consisting of two groups for one frame in the conventional art. As shown in Fig. 4, when vertical synchronized frequency of 50 Hz was used in the prior art, sub-fields with different weighting values in one frame are divided into two groups and is arranged according to the weighting values.

For example, a first sub-field group may comprise a sub-field with weighting value 1, a sub-field with weighting value 8, a sub-field with weighting value 16, a sub-field with weighting value 32 and a sub-field with weighting value 64.

A second sub-field group comprises a sub-field with weighting value 2, a sub-field with weighting value 4, two sub-fields with weighting value 8, a sub-field with weighting value 16, a sub-field weighting value 32 and a sub-field with weighting value 64.

In such case, the weighting value sum of sub-field in one arranged frame is 1 + 2 + 4 + 8 + (8+8) + (16+16) + (32+32) + (64+64) or 255. As result, 256 gray-level can be displayed. And also, the above method can cause the same effect as use of 100 Hz frequency resulting to removing the flicker phenomenon because the image per one frame can be displayed repeatedly twice at the twice rate.

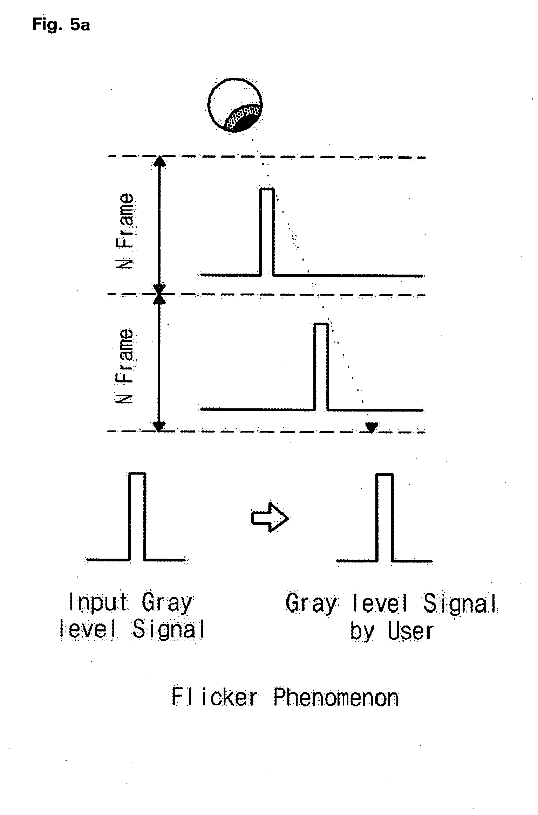

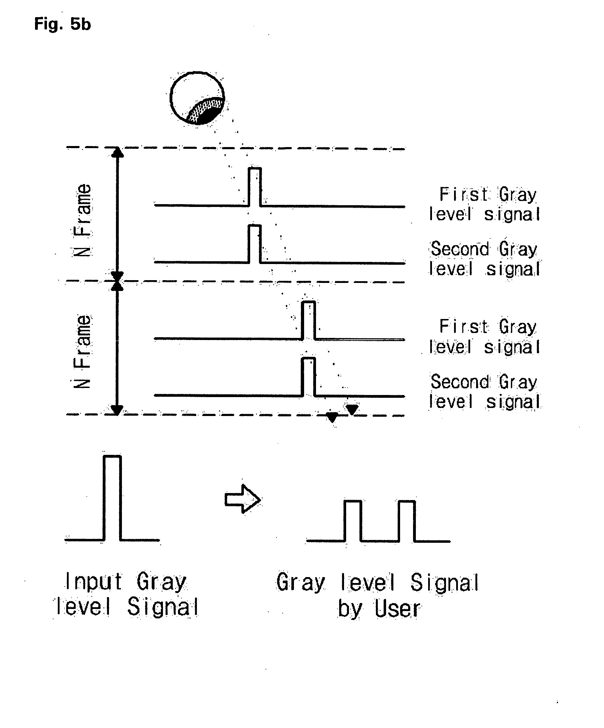

Fig. 5a and Fig. 5b show the flicker and the dual-image phenomenon that may be caused in the methods of prior art. Fig. 5a shows the flicker phenomenon that may be caused in the image displayed in the PAUSECAM Method using 50 Hz-frequency, and Fig. 5b shows a dual-image phenomenon that may be caused if image is displayed with two sub-field groups.

As shown in Fig. 5a, an image displayed with the lower frequency of 50 Hz may cause a flicker phenomenon that can be perceived by a user. For overcoming this problem, the display method consisting of two sub-fields for one frame may be used for removing the flicker phenomenon, as shown in Fig. 5a.

As shown in Fig. 5b, when identical images are displayed repeatedly twice for one frame, the location of image may be deviated from visible sight because of the movement of the user sight toward the moving image and the image displayed by the added second sub-field group.

Therefore, a problem that the image on the retina of user can be overlapped may be caused.

### SUMMARY OF THE INVENTION

Accordingly, an object of the present invention is to solve at least the problems and disadvantages of the background art.

The present invention is supposed for solving the above problem, and therefore it is an object of the present invention to provided a plasma display apparatus and a method for displaying an image using the same wherein the flicker phenomenon that may result from display the image with a lower frequency can be removed and at the same time the dual-image phenomenon can be removed for improving the quality of the image.

### BRIEF DESCRIPTION OF THE DRAWINGS

The invention will be described in detail with reference to the following drawings in which like numerals refer to like elements.
Fig.1 shows the structure of a common plasma display panel.
Fig.2 shows descriptive view for explaining the driving device of the conventional plasma display panel.
Fig. 3 shows a method for processing an image gray-level in the conventional plasma display panel.
Fig. 4 shows the outline of sub-fields consisting of two groups for one frame in the conventional art.
Fig. 5a shows the flicker phenomenon that may be caused in the image displayed in the PAUSECAM Method using 50 Hz-frequency, and Fig. 5b shows a dual-image phenomenon that may be caused if image is displayed with two sub-field groups.
Fig.6 shows a block diagram for explaining the image processing apparatus of a plasma display panel according to one embodiment of the present invention.
Fig. 7a shows schematic view for the structure of the high pass filter.
Fig. 7b shows schematic view for the low pass filter according to one embodiment of the present invention.
Fig. 8 shows a descriptive view for explaining the low pass filter according to the first embodiment of the present invention.
Fig. 9 shows schematic view of the wave pattern with that the filtered signal of the first embodiment is displayed as images.
Fig. 10 shows a block diagram for explaining other image processing apparatus of a plasma display panel according to the second embodiment of the present invention.
Fig. 11 shows schematic view of wave pattern in that the filtered signal is displayed according the second embodiment of the present invention.
Fig. 12 shows a block diagram for explaining the treatment apparatus of the plasma display panel according to the third embodiment of the present invention.
Fig.13 shows a schematic view of the wave pattern that the filtered signal according to the third embodiment of the present invention is displayed as images.
Below the preferred embodiments of the present invention will be described with the accompanied drawings.

### DETAILED DESCRIPTION OF PREFERRED EMBODIMENTS

According to the first embodiment of the present invention, the plasma display panel comprises a gray level signal dividerdividing a gray level signal input for one frame into a first gray level signal and a second gray level signal, a high pass filter filtering the first gray level signal through high frequency bandwidth, and a low pass filter filtering the second gray level signal through low frequency bandwidth.

According to the second embodiment of the present invention, the plasma display panel comprises a gray level signal divider dividing a gray level signal input for one frame into a first gray level signal and a second gray level signal, a frame memory part storing the first gray level signal and the second gray level signal based on frame unit, a high pass filter filtering the first gray level signal of the present frame through high frequency bandwidth, an average signal generator converting the second gray level signal of the present (N) frame and a next (N+1) frame to generate an average signal, and a low pass filter filtering the average signal through low frequency bandwidth.

Accoridng to the third embodiment of the present invention, the plasma display panel comprises a gray level signal divider dividing a gray level signal input for one frame into a first gray level signal and a second gray level signal, a frame memory part storing the first gray level signal and the second gray level signal based on frame unit, a high pass filter filtering the first gray level signal of the present frame through high frequency bandwidth, an average signal generator converting the second gray level signal of the present (N) frame and a next (N+1) frame to generate an average signal, a low pass filter filtering the average signal through low frequency bandwidth, a Y signal convertor converting the second gray level signal into R (Red), G (Green) and B (Blue) luminance signal of the present frame and the next frame, a gray level signal selector selecting the second gray level signal of the present frame and the next frame depending on the difference of the gray level values between the present frame and the next frame of the luminance signal input from the Y signal converting part, a noise removing part removing the noise of the selected gray level signal, and a selector adding the gray level signal from which to remove noise to any one gray level signal among the first gray level signal of the present frame after the division, the second gray level signal of the present frame and the second gray level signal of the next frame.

According to the first embodiment of the method for processing image, the method comprises (a) a gray level signal division step of dividing a signal gray level signal input for one frame into a first gray level signal and a second gray level signal, (b) high pass filtering step of filtering the first gray level signal through high frequency bandwidth, and (c) A low pass filtering step of filtering the second gray level signal through low frequency bandwidth.

According to the second embodiment of the method for processing image, the method comprises (a) a gray level signal dividsion step of dividing a gray level signal input for one frame into a first gray level signal and a second gray level signal, (b) a frame memory step of storing the first gray signal and the second gray level signal based on frame unit, (c) a high pass filtering step of filtering the first gray level signal of the present frame through high frequency bandwidth, (d) an average signal generating step of converting the second gray level signal of the present (N) frame and a next (N+1) frame to generate an average signal, and (d) a low pass filtering step of filtering the average signal through low frequency bandwidth.

Accoding to the third embodiment of the method for processing image, the method comprises (a) a gray level signal division step of dividing a gray level signal input for one frame into a first gray level signal and a second gray level signal, (b) a frame memory step of storing the first gray level signal and the second gray level signal based on frame unit, (c) a high pass filter step of filtering the first gray level signal of the present frame through high frequency bandwidth, (d) an average signal generating step of converting the second gray level signal of the present (N) frame and a next (N+1) frame to generate an average signal, (e) a low pass filter step of filtering the average signal through low frequency bandwidth, (f) a Y signal converting step of converting the second gray level signal into R (Red), G (Green) and B (Blue) luminance signal of the present frame and the next frame, (g) a gray level signal selecting step of selecting the second gray level signal of the present frame and the next frame depending on the difference of the gray level values between the present frame and the next frame of the luminance signal input from the Y signal converting part, (h) a noise removing step of removing the noise of the selected gray level signal, and (i) a selecting step of adding the gray level signal from which to remove noise to any one gray level signal among the first gray level signal of the present frame after the division, the second gray level signal of the present frame and the second gray level signal of the next frame.

As mentioned in the above, the present invention divides the input gray level signal into the first gray level signal and the second gray level signal for embodying image for one frame as two sub-field groups. The first gray level signal increases the displayed brightness on account of high pass filtration while the second gray level signal decreases the displayed brightness on account of low pass filtration. Hence, the dual image phenomen can be removed and the fliker phenomen on the panel can be removed by the filtered first and second gray level signals.

At this time, in the seoond gray level signal, the dual image can be removed effectively because the seoond gray level signal is filtered after obtaining the average signal between the present frame and the next frame with the frame memory part.

And also, according to the present invention, the second gray level signal displaced spatially against the first gray level signal can be displayed because the selected second gray level signal is added and filtered using the difference of the gray level values between the second gray level signals of the present frame and the next frame

Preferred embodiments of the present invention will be described in a more detailed manner with reference to the drawings.

### Example 1

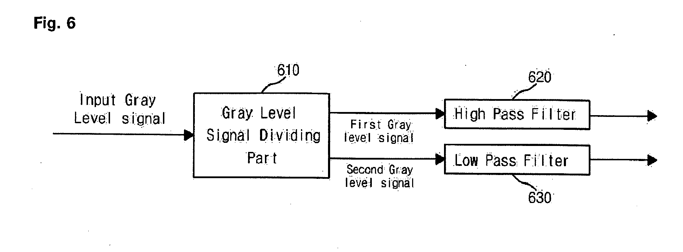

Fig.6 shows a block diagram for explaining the image processing apparatus of a plasma display panel according to one embodiment of the present invention. As shown in Fig. 6, in the image processing apparatus according to one embodiment of the present invention a gray-level signal input for one frame is divided into a first gray-level signal and a second gray-level signal and the first gray-level signal is filtered through high frequency bandwidth and the second gray-level signal is filtered through low frequency bandwidth.

In order to embody a driving device for the above plasma display panel the apparatus according to one embodiment of the plasma display panel comprises a gray-level signal divider 610, a high-pass filter 620 and a low-pass filter 630.

The gray-level signal divider 610 divides the gray-level signal input for one frame into a first gray-level signal and a second gray-level signal. At this time the first gray-level signal and the second gray-level signal may be subsequently mapped on a first sub-field group and a second sub-field group within one frame with a sub-field mapping part (not shown).

The high pass filter 620 may filter the first gray-level signal transmitted from the gray-level divider 610 through a high frequency bandwidth. Such filtering method corresponds to a kind of spatial filtering in the image processing method and the first gray-level signal filtered at the high pass filter increases the brightness of the image displayed on the panel.

The low pass filter 630 may filter the second gray-level signal transmitted from the gray-level signal divider 610 through a low frequency bandwidth.. Such filtering method corresponds to a kind of spatial filtering in the image processing method and the second gray-level signal filtered at the low pass filter decreases the brightness of the image displayed on the panel.

Hence the brightness displayed by the second gray-level signal decreases while the illuminaiton displayed by the first gray-level signal increases, and therefore the image seems to be displayed by the first gray-level signal. In case of moving image, the dual image phenomenon that may be caused by the first and second gray-level signal in the prior art can be avoided.

Now if the transmitted signal is a stationary image signal, the average value of the first and second gray-level signal is equivalent to the gray-level signal value of the transmitted gray-level signal.

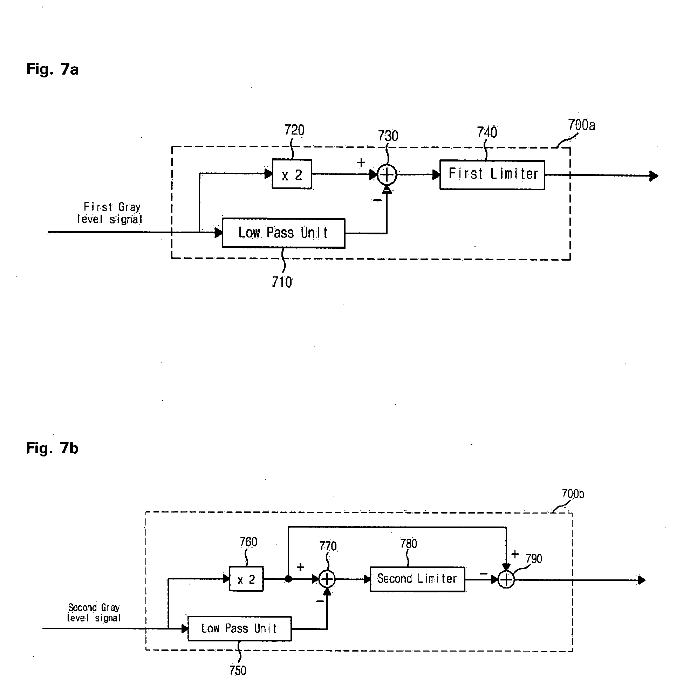

The high pass filter and low pass filter as mentioned above is depicted in detail in Fig. 7. Fig. 7a and Fig. 7b show a descriptive view for explaining the high pass filter and low pass filter according to one embodiment of the present invention. Fig. 7a shows schematic view for the structure of the high pass filter, and Fig. 7b shows schematic view for the low pass filter according to one embodiment of the present invention.

As shown in Fig. 7a, a high pass filter 700a comprises a low pass unit 710, a multiplier 720, an adding unit 730 and a first limiter 740.

The low pass unit 710 may function as a kind of low pass filter to filter through low frequency bandwidth, and may perform a masking task to adjacent pixels to remove noise.

The multiplier 720 may multiply frequency in integral times and in the first embodiment the multiplier 720 multiplies the input first gray-level signal by two times. The adding unit 730 may output the sum of at least transmitted two numbers.

In the high pass filter 700a for the first embodiment of the present invention, the input first level signal is multiplied by twice with the multiplier 720 and then the first level signal is offset by low frequency component transmitted through the low pass unit 710, and hence the first gray-level signal is filtered through high frequency bandwidth.

The first limiter 740 limits the value of the first gray-level signal between 0 and 255 when the first gray-level signal passes through high frequency bandwidth. That is, the first limiter 740 plays a role to limit the increased brightness of the first gray level to suitable level.

As shown in Fig. 7b, the low pass filter 700b comprises a low pass unit 750, a multiplier 760, a first adding unit 770, a second limiter 780 and a second adding unit 790.

The low pass unit 750 may function as a kind of low pass filter to filter through low frequency bandwidth, and may perform a masking task to adjacent pixels to remove noise.

The multiplier 760 may multiply frequency in integral times and in the first embodiment the multiplier 720 multiplies the input second gray-level signal by two times.

The first adding unit 770 may output the sum of at least two input numbers. In the first adding unit 770 for the first embodiment of the present invention, the second gray-level signal input as increased value twice by the multiplier 760 is offset by low frequency component transmitted through the low pass unit 750 to obtain a high frequency component.

The second limiter 780 limits the value of the second gray-level signal between 0 and 255 when the second gray-level signal passes through high frequency bandwidth. Subsequently, the limited second gray-level signal is transmitted through low frequency bandwidth via the adding unit 790, and therefore the second limiter play a role to limit the reduced brightness of the second gray-level signal in a proper level.

The second adding unit 790 offsets the second gray-level signal multiplied twice with the multiplier 760 by high frequency component output through the first adding unit 770, and therefore the second gray-level signal is filtered through lower frequency bandwidth.

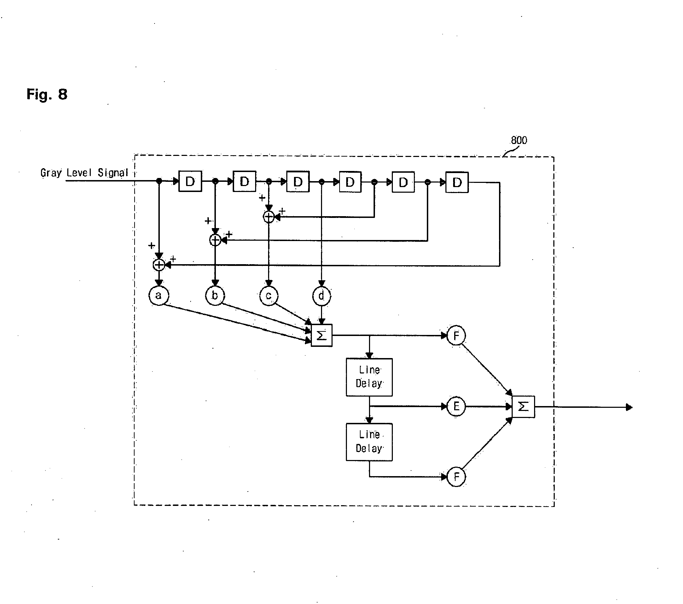

The low pass unit is depicted in Fig. 8. Fig. 8 shows a descriptive view for explaining the low pass filter according to the first embodiment of the present invention. As shown in Fig. 8, the low pass unit 800 as a kind of low pass filter may be named a average filter because the unit 800 may output the average value of the adjacent cells using N*M mask. The low pass unit 800 plays a role to remove noise to filter a transmitted signal through low frequency bandwidth.

In the embodiment shown in Fig.8, there exist six delays D for signal input in line unit and there exist two line delays, and therefore 3*7mask is used. Wherein a, b, c, d and F, E represent filtering coefficients.

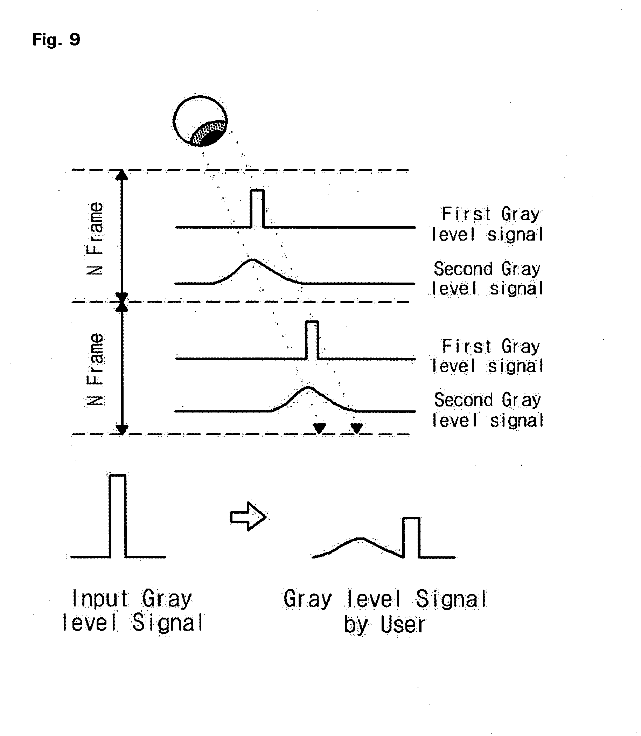

Fig. 9 shows schematic view of the wave pattern with that the filtered signal of the first embodiment is displayed as images. As shown in Fig.9, in case of moving images the second gray-level signal is not displaced to the first gray-level signal, but the wave is such a pattern that the first gray-level signal increases the brightness displayed on the panel while the second gray-level signal decreases the brightness displayed on the panel.

If the next frame is displayed or the image is displayed continuously, then the wave pattern according to the first gray-level signal would prevalently perceived by a user, and hence the same effect as the removal of dual-image occurs.

The method for processing image of plasma display panel according to the first embodiment of the present invention may be performed as following referring to each function part of Fig.6.

First, a gray-level signal that a gray-level signal transmitted for one frame is divided into a first gray level signal and a second gray level signal may be performed. And then high pass filtering that the first gray level signal is filtered through high frequency bandwidth may be performed. And then low pass filtering that the second gray level signal is filtered through low frequency bandwidth may be performed.

At this time the high pass filtering step further comprises a gray level value limiting step of limiting the value of the gray level signal when the first gray signal passes high frequency bandwidth, and the low band pass filtering step comprises a gray level signal value compensating step of compensating the value of gray level signal when the second gray level passes the low frequency bandwidth.

And also, the average value of the first and second gray level signal values is the same gray level signal value as the gray level signal value of the transmitted gray level signal value.

### Example 2

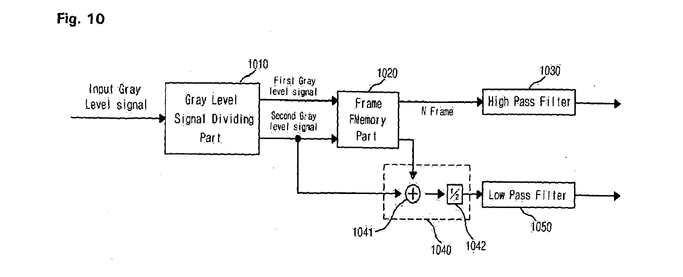

Fig. 10 shows a block diagram for explaining other image processing apparatus of a plasma display panel according to the second embodiment of the present invention. As shown in Fig.10, in the apparatus of the plasma display panel according to the second embodiment of the present invention a gray level signal transmitted for one frame is divided into a first gray level signal and a second gray level signal, and the first gray level signal is filtered through high frequency bandwidth while the second gray level signal is converted a average signal of the gray level signal for the present (N) frame and the next (N+1) frame, and then the average signal is filtered through low frequency bandwidth.

For embodying a driving apparatus of the plasma display panel as mentioned the above, in the second embodiment of the present invention the driving apparatus comprises a gray-level signal divider 1010, a frame memory part 1020, a high pass filter 1030, a average signal generator 1040 and a low pass filter 1050.

The gray level signal divider 1010 divides the gray level signal transmitted for one frame into a first gray level signal and a second gray level signal. At this time, the first gray level signal and the second gray level signal subsequently are mapped on a first sub field group and a second sub-field group with a sub-field mapping part (not shown).

The frame memory part 1020 stores the first gray level signal and the second gray level signal transmitted from the gray level divider 1010 based on frame unit.

At this time, the first gray level signal of the present frame (N) stored at the frame memory part 1020 is subsequently transmitted to the high pass filter 1030. And also, the second gray level signal of the present (N) frame stored at the frame memory part 1020 and the second gray level signal of the next (N+1) frame output at the gray level signal divider 1010 are subsequently input to the average signal generator 1040.

The high pass filter 1030 may filter the first gray level signal transmitted from the frame memory part 1020 through high frequency bandwidth. This filtering corresponds to a spatial filtering in image processing method, and the first gray level signal filtered at the high pass filter 1030 makes the brightness displayed on the panel increase.

The average signal generator 1040 may convert the second gray level signal of the present (N) frame and the next (N+1) frame transmitted from the gray level signal divider 1010 and the frame memory part 1020 to generate the average signal.

At this time, an adding unit 1041 may add the second gray level signal of the present frame and the next frame, and then the added signal is generated as the average signal that has a reduced gray level value in half time using a 1/2 dispenser 1042.

The low pass filter 1050 may filter the average signal transmitted from the average signal generator 1040 through low frequency bandwidth. This filtering corresponds to a spatial filtering, and the average signal of the second gray signal filtered at the low pass filter may make the brightness displayed on the panel decrease.

Hence the brightness displayed by the second gray level signal decrease while the brightness displayed by the first gray level signal increase, and as result the image seems to be displayed by the first gray level signal.

In case of moving image, the dual image phenomenon occurring in the prior art owing to the first gray level signal and the second gray level signal displayed as the identical brightness can be avoided. And also, when the second gray level signal is generated as the average signal, the first gray level signal is more distinctly displayed by making an edge component at the place contacting the first gray level signal.

If the input gray level signal is stationary image signal, the average value of the average signal of the first gray level signal and the second gray level signal has an identical gray level signal value to the gray level signal value of the input grave level signal value.

The low pass filter comprises a second limiter (now shown) to compensate the gray level signal value of the average signal when the average signal of the second signal passes low frequency bandwidth.

At this time, the second limiter compensates the gray level value of the average signal using the absolute value of the difference between the second gray level signal of the present frame and the next frame.

The detailed description for the structure and operating feature of the high pass filter and the low pass unit included into the high pass filter and the low pass filter, the first limiter and the second limiter has given referring Fig. 7a and Fig. 8, and hence will be leaved out here.

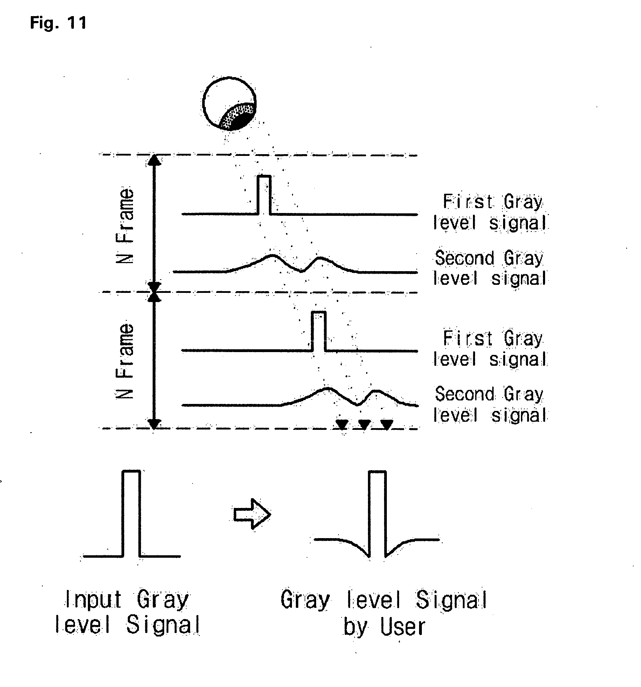

Fig. 11 shows schematic view of wave pattern in that the filtered signal is displayed according the second embodiment of the present invention. As shown in Fig. 11, in case of moving image, the average signal of the second gray level signal is not displaced to the first gray level signal, but there appears wave pattern that the first gray level signal increase the displayed brightness while the average signal of the second gray level signal decrease the the displayed brightness.

And also, in the average signal of the second gray level signal the wave pattern of the present frame and next frame is displayed for the present frame, and the brightness is reduced in halves compared with the case that only the gray level signal of the present frame is filtered.

If the next frame is displayed or the image is displayed continuously, the wave pattern of the first gray level signal is prevalently perceived and hence the effect that the dual image phenomenon may be removed can be obtained.

And also, because an eadge component is made at the portion that the average signal of the first gray level signal and the second gray level signal contact, the first gray level signal is more distinctly displayed.

In the plasma display panel according to the second embodiment of the present invention the method for processing images comprises the steps as following referring to each function part of Fig. 10.

First, the gray level signal transmitted for one frame is divided into the first gray level signal and the second gray level signal. Then the first and second gray level signals are stored based on frame unit. Then, the first gray level signal of the present frame is filtered through high frequency bandwidth. And then, the second gray level signal of the present (N) frame and the next (N+1) frame is converted to generate the average signal. And then, the average signal of the second gray level is filtered through low frequency bandwidth.

At this time, the high band pass filtering step further comprises a gray level value limitation step of limiting the value of the gray level signal when the first gray signal passes high frequency bandwidth, and the low band pass filtering step comprises a gray level compensating step of compensating the value of gray level when the second gray level passes the low frequency bandwidth.

And also, the compensating of the gray level value may compensate the filtered average signal of the second gray level signal using the absolute difference value between the gray level values of the present frame and the next frame.

And also, the average value of the average signal of the first and second gray level signal is the same gray level value as the gray level value of the transmitted gray level value.

### Example 3

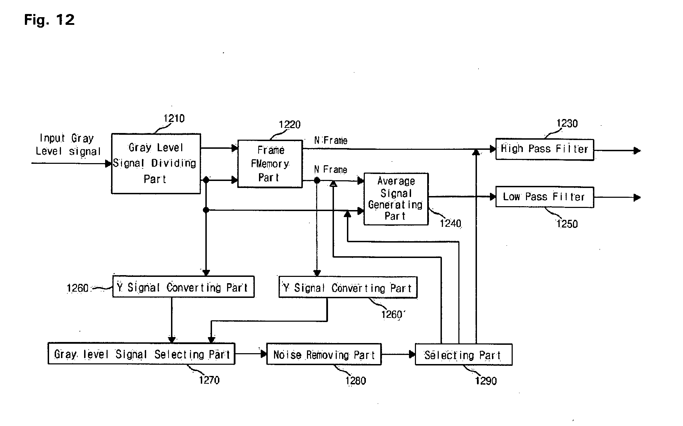

Fig. 12 shows a block diagram for explaining the processing apparatus of the plasma display panel according to the third embodiment of the present invention. As shown in Fig. 12, in the processing apparatus of the plasma display panel according to the third embodiment of the present invention the gray level signal transmitted for one frame is divided into a first gray level signal and a second gray level signal, the first gray level signal is filtered through high frequency bandwidth, the second gray level signal is converted to an average signal of the present frame and the next frame, the average signal is filtered through low frequency bandwidth, the second gray level signal of the present frame and the next frame is selected from the difference between the gray level values, and the average signal is added to any one signal among the first gray level signal of the present frame after the division, the second gray level signal of the present frame and the second gray level signal of the next frame.

For embodying a driving apparatus of the above plasma display panel, the third embodiment of the present invention comprises a gray level signal divider 1210, a frame memory part 1220, a high pass filter 1230, an average signal generator 1240, a low pass filter 1250, Y signal convertor 1260, 1260', a gray level signal selector 1270, a noise removing part 1280 and a selector 1290.

The second signal divider 1210 divides a gray level signal transmitted for one frame into a first gray level signal and a second gray level signal. At this time the first gray level signal and the second gray level signal are subsequently mapped on a first sub-field group and a second sub-field group within one frame with a sub-field mapping part (not shown).

The frame memory part 1220 stores the first gray level signal and the second gray level signal transmitted for one frame based on frame unit.

At this time, the first gray level signal of the present (N) frame stored at the frame memory part 1230 is transmitted to the high pass filter 1230. And also, the second gray level signal of the present (N) frame stored at the frame memory part 1220 and the second gray level signal of the next frame output from the gray level signal divider 1210 is subsequently transmitted to the average signal generator 1240.

The high pass filter 1230 filters the first gray level signal input from the frame memory part 1220 through high frequency bandwidth. This filtering corresponds to the spatial filtering in the image processing methods, and the first gray level signal filtered at the high pass filter increases the brightness displayed on the panel.

The average signal generator 1240 converts the second gray level signal of the present (N) frame and the next (N+1) frame input from the gray level signal divider 1210 and the frame memory part 1220 to generate the average signal using an adding unit 1241 and a dispenser 1242.

At this time, the adding unit 1241 adds the second gray level signal of the present frame and the next frame, and the added signal is generated as an average signal that has a reduced gray level value in halves using the 1/2 dispenser 1242.

The low pass filter 1250 filters the average signal input from the average signal generator 1240 through low frequency bandwidth. This filtering corresponds to a spatial filtering in the image processing methods, and the average signal of the second gray level signal filtered at the low pass filter decreases the brightness displayed on the panel.

The Y signal convertor 1260, 1260' converts the second gray level signal into the luminance signal of R (Red), G (Green) and B (Blue).

The gray level signal selector 1270 selects the second gray level signal of the present frame or the next frame according to the difference of the gray level values between the present frame and the next frame of the luminance signals input from the Y signal convertor 1260, 1260' of the present frame and the next frame. That is, the selector 1270 selects the second gray level signal of the frame to be displayed using the difference of the gray level values.

The noise removing part 1280 removes the noise of the selected second gray level signal. At this time, the noise removing part may consist of a low pass unit to have function of noise removal.

The selector 1290 adds the second gray level signal for noise to be removed to any one gray level signal among the first gray level signal divided from the gray level signal divider 1210, the second gray level signal of the present frame and the second gray level signal of the next frame. This addition is to adjust the brightness of the second gray level signal for noise to be removed using the low or high pass filter to subsequently display on the panel.

That is, the image processing apparatus according to the third embodiment of the present invention comprises the Y signal converting part, the gray level signal selector, the noise removing part and the selector comparted with to the first embodiment and the second embodiment.

With the above components, the conversion of the luminance signal, the comparison of the gray level value, the removal of noise and the selection of filtering are performed to display at the place of the second gray level signal according to the moving image or the stationary image resulting to the removal of the dual image phenomenon without the decrease of the brightness displayed by the second gray level signal.

Fig. 12 shows an image treatment apparatus for only B (Blue), but the apparatus for R (Red) or G (Green) may comprise the same components as for B (Blue). Referring to Fig. 12, when the input gray level signal is stationary image signal, the average value of the average signal of the first gray level signal and the second gray level signal is the same gray level signal value as the gray level signal value of the input gray level signal.

And also, when the average signal of the second gray level signal passes low frequency bandwidth, the low pass filter of the present invention comprises a second limiter (not shown) to compensate the gray level value of the average signal.

At this time, the second limiter may compensate the gray level of the average signal using the absolute difference between the second gray level signal of the present frame and the next frame or using the absolute difference between the values the luminance signal (Y) gray level of the present frame and the next frame.

The detailed description for the structure and operating feature of the high pass filter and the low pass filter, and the low pass unit inclued into the high pass filter and the low pass, the first limiter and the second limiter has given referring Fig. 7a and Fig. 8 and hence will be leaved out here.

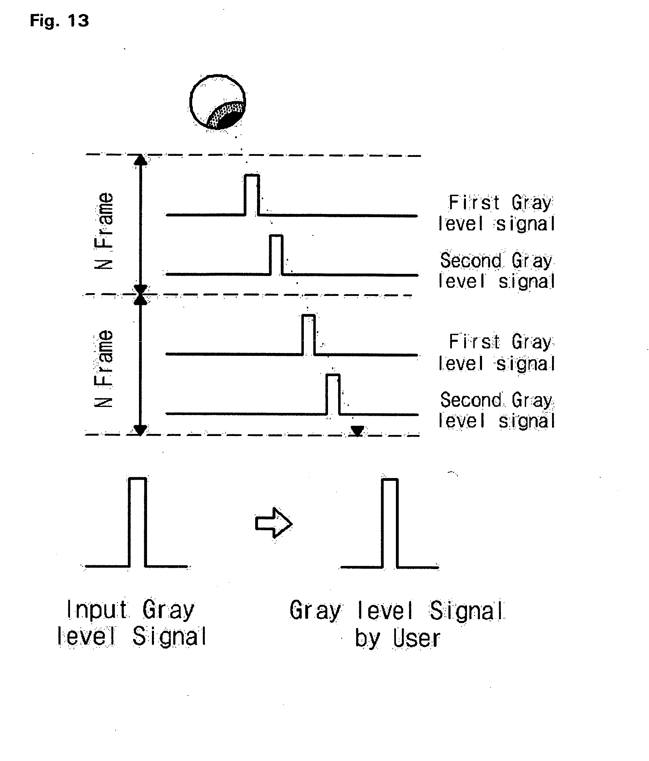

Fig.13 shows a schematic view of the wave pattern that the filtered signal according to the third embodiment of the present invention is displayed as images. As shown in Fig.13, regarding to the third embodiment of the present invention in case of the moving image, a wave pattern that the second gray level signal is displayed at the place where the first gray level signal is displaced relating to the place of the displayed light may be formed.

At this time, the second gray level signal is displayed at an intermediate place where the first gray level signal of the present frame and the next frame are displayed using each function part of Fig.12 described in detail previously.

When an image is displayed by the image processing apparatus of the plasma display panel according to the third embodiment of the present invention, the wave pattern of the second gray level signal that is displaced continuously against the first gray level signal is perceived by a user, and therefore the effect that the dual image phenomenon can be removed can be obtained.

The method for processing image with the plasma display panel according to the third embodiment of the present invention comprises the following steps referring to each function part of Fig.12.

First, a gray level signal input for one frame is divided into the first gray level and the second level signal. Then, the first and the second gray level signal are stored based on frame unit. Then, the first gray level signal of the present frame is filtered through high frequency bandwidth. Then, the second gray level signal of the present (N) frame and the next (N+1) frame is converted to generate an average signal. Then, the average signal is filtered through low frequency bandwidth.

Then, the second gray level signal is converted into Y signal that converts the signal to R (Red), G (Green) and B (Blue) luminance signal of the present frame and the next frame. Then, the second gray level signal of the present or the next frame is selected depending on the gray level value difference between the present frame and the next frame of the luminance signal input from the Y signal conversion step. Then, the noise of the converted gray level signal is removed.

Then, any gray level signal among the first gray level signal of the present frame, the second gray level signal of the present frame and the second gray level signal of the next frame that the noise are removed is added to.

At this time, when the first gray level signal passes the high frequency bandwidth the high pass filtering step further comprises a gray level value limitation step of the value of limiting the gray level signal, and on the other hand when the average of the second gray level signal passes the low frequency bandwidth the low pass filtering step further comprises a gray level value compensating step of compensating the value of the gray level signal.

And also, the gray level value compensating step compensates the average signal of the filtered second gray level signal using the absolute difference value between the gray level value of the present frame gray level signal and the next frame gray level signal, or using the absolute value of the difference between the luminance signal Y gray level signal of the present frame and that of the next frame.

And also, if the input gray level signal is a stationary image signal, the average of the average signal of the first gray level signal and the second gray level signal is the same gray level value as the input gray level value of the gray level signal.

It will be understood that the technical construction of the present invention described previously in detail may be implemented other substantial embodiment not departing from the technical scope or essential feature of the present invention by the skilled in this art.

Therefore, it should be understood that the foregoing embodiments are examples not to limit the scope of the present invention in all the light, and the scope of the present invention is represented by accompanied claims rather that the embodiments, and the meaning and the scope of claims and all of the modification and alternation from the equivalent notion is included into the scope of the present invention.

As mentioned above, the present invention has the effect that the flicker phenomenon and the dual image phenomenon can be removed to enhance the quality of the image if the image is displayed on the plasma display panel with low frequency.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A plasma display apparatus comprising;
a gray level signal divider dividing a gray level signal input for one frame into a first gray level signal and a second gray level signal;
a high pass filter filtering the first gray level signal through a high frequency bandwidth; and
a low pass filter filtering the second gray level signal through a low frequency bandwidth.

2. The plasma display apparatus according to claim 1, wherein the high pass filter comprises a first limiter limiting the value of the gray level signal when the first gray level signal passes in the high frequency bandwidth.

3. The plasma display apparatus according to claim 1, wherein the low pass filter comprises a second limiter compensating the value of the gray level signal when the second gray level signal passes in the low frequency bandwidth.

4. The plasma display apparatus according to claim 1, wherein the average value of the first gray level signal and the second gray level signal is equivalent to the value of the input gray level signal, when the input gray level signal is a stationary image signal.

5. A method for processing images in a plasma display apparatus comprising;
(a) A gray level signal division step of dividing a signal gray level signal input for one frame into a first gray level signal and a second gray level signal;
(b) A high pass filtering step of filtering the first gray level signal in high frequency bandwidth; and
(c) A low pass filtering step of filtering the second gray level signal in low frequency bandwidth.

6. The method for processing images according to claim 5, wherein the high pass filtering step comprises a gray level limiting step of limiting the value of the gray level signal when the first gray level signal passes in the high frequency bandwidth.

7. The method for processing image according to claim 5, the low pass filtering step comprises a gray level value compensating step of compensating the value of the gray level signal when the second gray level signal passes in the low frequency bandwidth.

8. The method for processing image according to claim 5, wherein if the input gray level signal is a stationary image signal, the average value of the first gray level signal and the second gray level signal is equivalent to the value of the input gray level signal.

9. A plasma display apparatus comprising,
a gray level signal divider dividing a gray level signal input for one frame into a first gray level signal and a second gray level signal;
a frame memory part storing the first gray level signal and the second gray level signal based on frame unit;
a high pass filter filtering the first gray level signal of the present frame through high frequency bandwidth;
an average signal generator converting the second gray level signal of the present (N) frame and a next (N+1) frame to generate an average signal; and
a low pass filter filtering the average signal in low frequency bandwidth.

10. The apparatus according to claim 9, wherein the high pass filter further comprises a first limiter that limits the gray level signal when the first gray level signal passes the high frequency bandwidth.

11. The apparatus according to claim 9, wherein the low pass filter comprises a second limiter compensating the average signal when the average signal of the second gray level signal passes in the low frequency bandwidth.

12. The apparatus according to clam 11, wherein the second limiter compensates using the absolute value of difference of the value between the second grave level signals of the present frame and the next frame.

13. The apparatus according to claim 9, wherein if the input gray level signal is a stationary image signal, then the average value of the average signal of the first gray level signal and the second gray level signal is equivalent to the gray level signal value of the input gray level signal.

14. A method for processing images with the plasma display apparatus comprising;
(a) a gray level signal dividing step of dividing a gray level signal input for one frame into a first gray level signal and a second gray level signal;
(b) a frame memory step of storing the first gray signal and the second gray level signal based on a frame unit;
(c) a high pass filtering step of filtering the first gray level signal of the present frame through high frequency bandwidth;
(d) an average signal generating step of converting the second gray level signal of the present (N) frame and a next (N+1) frame to generate an average signal; and
(e) a low pass filtering step of filtering the average signal through low frequency bandwidth.

15. The method according to claim 14, wherein the high pass filtering step comprises a gray level value limiting step of limiting the value of the gray level signal when the first gray level signal passes the high frequency bandwidth.

16. The method according to claim 14, wherein the low pass filtering step comprises a gray level compensating step of compensating the value of the average gray level signal, when the average signal of the second gray level signal passes in low frequency bandwidth.

17. The method according to claim 16, wherein the gray level compensating step perfoms compensating using the absolute value of difference between the value of the present frame gray level signal and the next frame gray level signal.

18. The method according to claim 14, wherein if the input gray level signal is a stationary image signal, the average value of the average signal of the first gray level signal and the second gray level signal is equivalent to the gray level signal of the input gray level signal.

19. A plasma display apparatus comprising,
a gray level signal divider dividing a gray level signal input for one frame into a first gray level signal and a second gray level signal;
a frame memory part storing the first gray level signal and the second gray level signal based on a frame unit;
a high pass filter filtering the first gray level signal of the present frame in high frequency bandwidth;
an average signal generator converting the second gray level signal of the present (N) frame and a next (N+1) frame to generate an average signal;
a low pass filter filtering the average signal in low frequency bandwidth;
a Y signal convertor converting the second gray level signal into R (Red), G (Green) and B (Blue) luminance signal of the present frame and the next frame;
a gray level signal selector selecting the second gray level signal of the present frame and the next frame according to the difference of the gray level values between the present frame and the next frame of the luminance signal input from the Y signal converting part;
a noise removing part removing the noise of the selected gray level signal; and
a selector adding the gray level signal from which noise is removed to any one gray level signal among the first gray level signal of the present frame after the division, the second gray level signal of the present frame and the second gray level signal of the next frame.

20. The apparatus according to claim 19, wherein the high pass filter further comprises a first limiter limiting the value of the gray level signal when the first gray level signal passes the high frequency bandwidth.

21. The apparatus according to claim 19, the low pass filter further comprises a second limiter limiting the value of the gray level signal when the second gray level signal passes the low frequency bandwidth.

22. The apparatus according to claim 21, wherein the second limiter obtains the absolute value of the gray level value difference between the present frame and the next frame to compensate using the absolute value.

23. The apparatus according to claim 22, wherein the second limiter obtains the absolute value of the gray level value difference between the present frame luminance signal Y and the next frame luminance signal to compensate using the absolute value.

24. The apparatus according to claim 19, wherein if the input gray level signal is a stationary image signal, then the average value of the average signal of the first gray level signal and the second gray level signal is equivalent to the gray level signal of the input gray level signal.

25. A method for processing image with plasma display apparatus comprising;
(a) a gray level signal dividing step of dividing a gray level signal input for one frame into a first gray level signal and a second gray level signal;
(b) a frame memory step of storing the first gray level signal and the second gray level signal in a frame unit;
(c) a high pass filter step of filtering the first gray level signal of the present frame through high frequency bandwidth;
(d) an average signal generating step of converting the second gray level signal of the present (N) frame and a next (N+1) frame to generate an average signal;
(e) a low pass filter step of filtering the average signal through low frequency bandwidth;
(f) a Y signal converting step of converting the second gray level signal into R (Red), G (Green) and B (Blue) luminance signal of the present frame and the next frame;
(g) a gray level signal selecting step of selecting the second gray level signal of the present frame and the next frame depending on the difference of the gray level values between the present frame and the next frame of the luminance signal input from the Y signal converting part;
(h) a noise removing step of removing the noise of the selected gray level signal; and
(i) a selecting step of adding the gray level signal from which to remove noise to any one gray level signal among the first gray level signal of the present frame after the division, the second gray level signal of the present frame and the second gray level signal of the next frame.

26. The method according to claim 25, wherein the high pass filter step further comprises a gray level value limiting step of limiting the value of the gray level signal when the first gray level signal passes the high frequency bandwidth.

27. The method according to claim 25, wherein the low pass filter step further comprises a gray level value compensating step of compensating the gray level signal of the gray level signal when the second gray level signal passes the low frequency bandwidth.

28. The method according to claim 27, wherein the gray level compensating step performs compensating using the absolute value of difference between the grave level values of the present frame gray level signal and the next frame gray level signal.

29. The method according to claim 25, wherein the gray level compensating step performs compensating using the absolute value of the gray level value difference between the present frame luminance signal Y and the next frame luminance signal Y.

30. The method according to claim 25, wherein if the input gray level signal is a stationary image signal, then the average value of the average signal of the first gray level signal and the second gray level signal is equivalent to the value of the input gray level signal.
